# EUROPÄISCHE PATENTSCHRIFT

(11) **EP 2 808 112 B1**
(45) Veröffentlichungstag und Bekanntmachung des Hinweises auf die Patenterteilung: **13.01.2016**
(21) Anmeldenummer: 14151243.4
(22) Anmeldetag: 15.01.2014
(51) Int. Cl.: B23D 47/04

(54) **Vorrichtung zum Führen von plattenförmigen Werkstücken**
Device for guiding board-shaped workpieces
Dispositif d'acheminement de pièces usinées en forme de plaques

(30) Priorität: 03.05.2013 DE 202013101927 U
(43) Veröffentlichungstag der Anmeldung: 03.12.2014
(73) Patentinhaber: Aigner, Georg, 94419 Reisbach (DE)
(72) Erfinder: Aigner, Georg, 94419 Reisbach (DE)
(74) Vertreter: Gustorf, Gerhard

(56) Entgegenhaltungen:
- DE-A1- 10 332 752
- DE-C1- 3 830 856
- DE-T2- 69 319 451
- US-A- 4 628 782
- US-A1- 2002 108 480

## Beschreibung

Die Erfindung betrifft eine Vorrichtung zum Führen von plattenförmigen Werkstücken am Anschlaglineal einer Werkzeugmaschine, insbesondere Tisch- oder Formatkreissäge. Bei den plattenförmigen Werkstücken handelt es sich vorzugsweise um solche aus Holz, Kunststoff oder Leichtmetall.

Zum Andrücken der Werkstücke gegen den Maschinentisch werden häufig Druckeinheiten eingesetzt, wie sie von dem Anmelder unter der Bezeichnung Druckmodul hergestellt und vertrieben werden (vgl. z.B. DE 86 01 338 U). Die Druckmodule sind hierbei mit wenigstens einer Druckrolle bestückt, die innerhalb der Druckeinheit gegen das Werkstück so verstellt werden kann, dass eine eingebaute Feder für einen gleichmäßigen Druck auf das Werkstück sorgt.

Ein Problem der bisher bekannten Lösungen besteht in der Halterung und Befestigung der Druckeinheit am Maschinentisch, der hierzu in aller Regel mit besonderen Befestigungselementen bestückt werden muss. Besondere Schwierigkeiten bereitet die Befestigung der Druckeinheit, wenn über dem Maschinentisch größere Breiten überbrückt werden müssen - hierfür dienen nach dem Stand der Technik aufwendige und wenig stabile Portalkonstruktionen - oder wenn beim Gehrungssägen das häufig verzogene oder nicht dickenkonstante Werkstück fest gegen den Maschinentisch gedrückt werden muss.

Aus DE 38 30 856 C1 ist eine Plattenaufteilsäge mit einer Werkstückvorschubvorrichtung in der Ebene der Tischauflagefläche bekannt, bei der vor und hinter der Schnittebene jeweils ein Rollentisch mit Friktionsrollen für den Vorschub bis zu einem Anschlag vorgesehen ist.

Gegenstand der DE 693 19 451 T2 ist ein Werkzeug zum Schneiden von Brettmaterial, das zwischen einem oberen und einem unteren Teil durchgeschoben wird, die über Magneteinheiten in Richtung auf das Werkstück angezogen werden.

Der Erfindung liegt die Aufgabe zugrunde, eine Vorrichtung zum Führen von plattenförmigen Werkstücken für die oben angesprochenen Einsatzzwecke zur Verfügung zu stellen, die eine einfache und rasch anzubringende Konstruktion hat und ein von der Druckeinheit ausgeübtes Moment, das vor allem beim Gehrungssägen sehr groß ist, sicher abstützen kann und die auch bei großen zu überbrückenden Breiten ausreichend stabil ist.

Gemäß der in Anspruch 1 beanspruchten Erfindung ist zur Befestigung der Druckeinheit eine vertikale Säule vorgesehen, die an ihrer plan ausgebildeten Unterseite mit wenigstens einem Haftmagneten versehen ist, der kraftschlüssig auf dem metallischen Maschinentisch aufliegt, während an ihrem oberen Ende Mittel zur Verankerung einer horizontalen Kragplatte vorgesehen sind, an deren freiem Ende die Druckeinheit lösbar angebracht ist.

Der Haftmagnet an der Unterseite der Säule hat den erheblichen Vorteil, dass zur Fixierung der Säule keine weiteren Maßnahmen getroffen werden müssen und insbesondere keine zusätzlichen Befestigungselemente erforderlich sind. In Abhängigkeit von der Zahl der Haftmagnete wird beim Aufsetzen der Säule eine sehr große Haltekraft erzeugt, die auch dann ausreicht, wenn die horizontale Kragplatte verhältnismäßig lang ist oder wenn ein Werkstück mit nicht gleich bleibender Dicke oder Verzugsfehlern mit ausreichend großer Kraft gegen den Maschinentisch gedrückt werden muss, insbesondere beim Gehrungssägen, bei dem ein konstanter Winkel eingehalten werden muss.

Wenn in Weiterbildung der Erfindung die Kragplatte ein Rechteck-Rohrprofil hat, das beispielsweise aus Edelstahl besteht, wirkt sich dieses vorteilhaft auf die Biegesteifigkeit aus, was bei großen Überbrückungslängen von Vorteil ist. In das Rohrprofil können zur weiteren Versteifung nebeneinanderliegende Flachstäbe hochkant eingelegt sein.

Da bei starken Haftmagneten oder dem Einsatz mehrerer Haftmagnete an der Unterseite der Säule die Haftkraft sehr groß ist, ist es von Vorteil, am unteren Ende der Säule einen um eine exzentrische Achse schwenkbaren Lösehebel anzubringen, dessen gegen den Maschinentisch schwenkbares Ende abgerundet ist. Mit Hilfe dieses Hebels wird der Lösevorgang erheblich erleichtert, da beim Schwenken des Hebels dieser aufgrund seiner exzentrischen Lagerung die vertikale Säule vom Maschinentisch ohne großen Kraftaufwand abhebt.

Es gibt Anwendungsfälle, bei denen das Werkstück, das aus Kunststoff bestehen kann, auf seiner nach unten weisenden Fläche mittels des Sägeblattes angeritzt werden muss, um eine anschließende Verformung zu erleichtern. Für diesen Fall wird nach einem Merkmal der Erfindung eine Druckeinheit mit wenigstens einer Druckrolle eingesetzt, die über dem Sägeblatt positioniert wird. Die Druckeinheit ist in diesem Fall an einer sehr langen und trotzdem biegesteifen Kragplatte befestigt, die eine große Breite des Werktisches überspannt.

In einem anderen, vor allem beim Gehrungssägen vorkommenden Anwendungsfall hat die Druckeinheit mehrere, in einer Reihe angeordnete Druckrollen, die um parallele Achsen an einer Trägerschiene gelagert sind. Dabei ist es von Vorteil, wenn auf ihrer von dem Anschlaglineal abgewandten Außenseite die Druckrollen durch eine Schutzplatte abgedeckt sind, die mit der Trägerschiene verbunden ist. Die Schutzplatte verhindert dabei, dass die Hand der Bedienungsperson in den Bereich des Werkzeugs gelangt.

Bei einer alternativen Ausführungsform sind die Druckrollen zusammen mit ihrer Trägerschiene in einem Gehäuse untergebracht, dessen vier Seitenwände die Druckrollen einschließen. Dabei ist es günstig, wenn an dem Gehäuse ein Absaugstutzen angebracht ist, der zwei unterschiedliche Anschlussstutzen für eine Saugleitung aufweist.

In vorteilhafter Weiterbildung dieser Variante ist die Trägerschiene für die Druckrollen relativ zu dem Anschlaglineal in Querrichtung verstellbar. Hierzu kann vorgesehen sein, auf der Trägerschiene zwei Gleitklötze zu befestigen, die auf zwei Querachsen, welche zwischen den beiden langen Seitenwänden befestigt sind, verschiebbar gelagert sind.

Weitere Merkmale und Vorteile der Erfindung ergeben sich aus den Ansprüchen und aus der folgenden Beschreibung von Ausführungsbeispielen, die in der Zeichnung dargestellt sind. Es zeigen:
Figur 1 eine schematische Seitenansicht einer ersten Ausführungsform der Erfindung mit einer langen Kragplatte,
Figur 2 eine Unteransicht der Säule und des Anschlaglineals in Richtung des Pfeiles II der Figur 1,
Figur 3 die Ansicht der mit nur einer Druckrolle bestückten Druckeinheit in Richtung des Pfeiles III der Figur 1,
Figur 4 eine Variante der Erfindung mit einer aus vier Druckrollen bestehenden Druckeinheit mit Schutzplatte,
Figur 5 die Seitenansicht der in Figur 4 gezeigten Variante zum Gehrungssägen einer Holzplatte,
Figur 6 eine Variante der Figur 5,
Figur 7 eine weitere Ausführungsform der Erfindung, bei der die Druckeinheit ein Gehäuse mit Absaugstutzen hat,
Figur 8 eine Unteransicht der Druckeinheit der Figur 7,
Figur 9 einen Querschnitt in der Ebene IX - IX der Figur 8 und
Figur 10 die Stirnansicht des Gehäuses in Richtung des Pfeiles X der Figur 7.

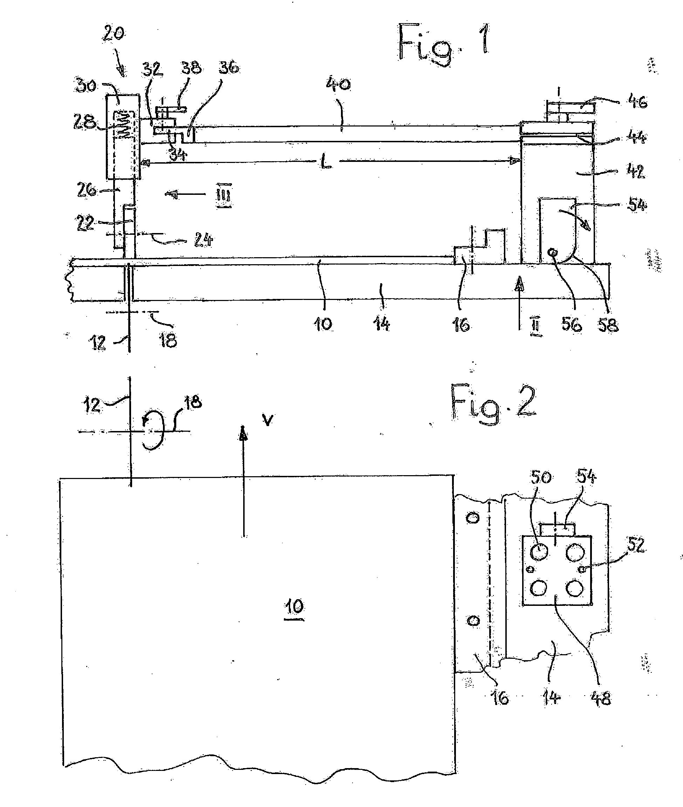

Figur 1 zeigt schematisch ein erstes Ausführungsbeispiel der Erfindung, das vorzugsweise zum Anritzen der Unterseite eines aus Kunststoff oder Leichtmetall bestehenden, plattenförmigen Werkstücks 10 mit Hilfe eines rotierenden Sägeblattes 12 dient. Das Werkstück 10 liegt auf dem Maschinentisch 14 einer Tischkreissäge oder Formatkreissäge auf und stützt sich an einem auf dem Maschinentisch 14 befestigten Anschlaglineal 16 ab, an dem entlang es während des Bearbeitungsvorgangs vorgeschoben wird. Dabei ritzt das um die Achse 18 rotierende Sägeblatt 12 das plattenförmige Werkstück 10 etwa bis zur Hälfte der Plattenstärke von unten ein.

Während dieses Bearbeitungsvorganges dient eine Druckeinheit 20 dazu, das plattenförmige Werkstück 10 genau oberhalb des Sägeblattes 12 gegen den Maschinentisch 14 zu drücken. Hierzu ist die Druckeinheit 20 mit einer Druckrolle 22 bestückt, die um eine horizontale Achse 24 frei drehbar an einem Rollenträger 26 gelagert ist. Dieser ist gegen die Kraft einer Feder 28 in einem Aufnahmegehäuse 30 vertikal verschieblich gelagert.

An einer Seite des Aufnahmegehäuses 30 ist ein im Querschnitt etwa C-förmiges Maul 32 befestigt, in das ein horizontaler Schenkel 34 eines Winkels 36 eingreift, der in dem Maul 32 mittels eines Klemmhebels 38 eingespannt ist. Der Winkel 36 ist am freien Ende einer horizontalen Kragplatte 40 befestigt, die eine ausreichend große Länge L von beispielsweise einem Meter und mehr hat, um einen großen Bereich über dem Maschinentisch 14 zu überspannen. Auf diesem ist gegenüber der Druckeinheit 20 eine vertikale Säule 42 platziert, auf deren oberem Ende das andere Ende 44 der Kragplatte 40 eingespannt ist, beispielsweise mit Hilfe eines Klemmhebels 46.

Wie Figur 2 zeigt, sind an der plan ausgebildeten Unterseite 48 der Säule 42 zylindrische Haftmagnete 50 versenkt so angebracht, dass sie bündig mit der Unterseite 48 abschließen. Beim

Aufsetzen der Säule 42 auf den metallischen Maschinentisch 14 wird diese durch die große Haftkraft der hier vier Magnete 50 sicher gehalten. Um ein Verdrehen der Säule 42 während des Bearbeitungsvorganges um ihre Hochachse zu vermeiden, können von der Unterseite Zentrierstifte 52 abstehen, die in entsprechende Bohrungen des Maschinentisches 14 formschlüssig eingreifen.

In Figur 1 ist angedeutet, dass an einer Außenseite der Säule 42 ein Lösehebel 54 angebracht ist, der um einem exzentrische Achse 56 in Richtung des eingezeichneten Pfeiles nach außen geschwenkt werden kann. Dabei stützt sich das von der exzentrischen Achse 56 abgewandte, abgerundete Ende 58 des Lösehebels 54 auf dem Maschinentisch 14 ab und hebt dabei die Säule 42 gegen die Kraft der Haftmagnete 50 ab.

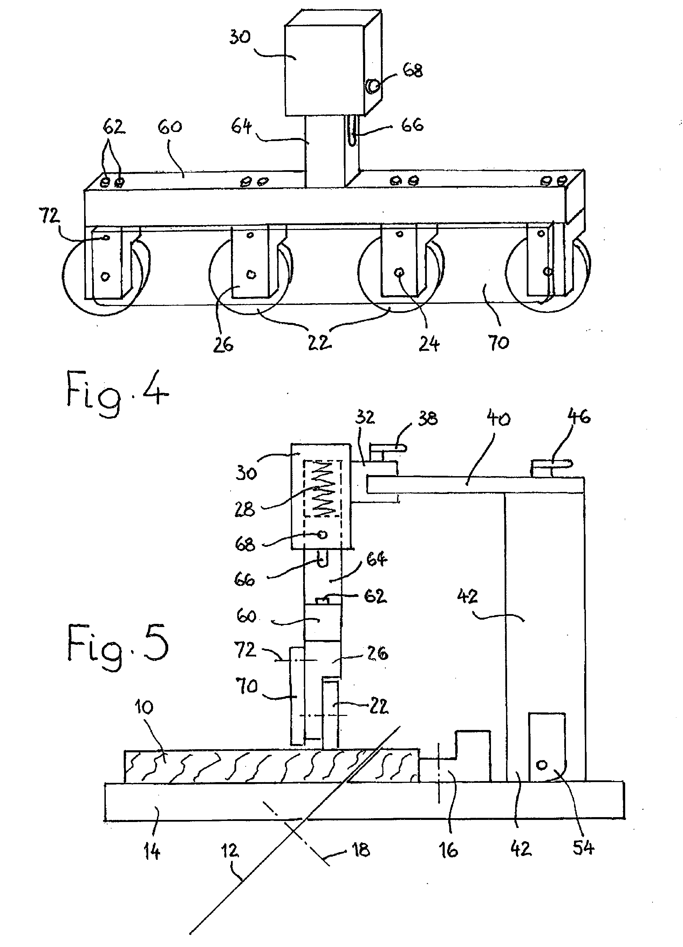

In den Figuren 4 und 5 ist eine Anwendungsmöglichkeit dargestellt, bei der es darauf ankommt, ein plattenförmiges Werkstück 10, das hier aus Holz besteht, an einer Längsseite mittels eines schräg gestellten Sägeblattes 12 auf Gehrung mit einem exakten Gehrungswinkel von beispielsweise 45° zu schneiden. Hier kommt es darauf an, das plattenförmige Werkstück 10 während des Schnittvorgangs exakt an dem Anschlaglineal 16 vorzuschieben und gleichzeitig mit hohem Druck gegen den Maschinentisch 14 zu pressen, weshalb hier eine Druckeinheit 20 mit insgesamt vier federbelastete Druckrollen 22 eingesetzt ist. Wie Figur 4 zeigt, sind die Druckrollen 20 mit ihren zueinander parallelen Achsen 24 in jeweils einem Rollenträger 26 gelagert, wobei alle vier Rollenträger 26 mit Hilfe von Schrauben 62 an einer gemeinsamen Trägerschiene 60 befestigt sind. Die Trägerschiene 60 ist am unteren Ende eines Stempels 64 befestigt, der in dem Aufnahmegehäuse 30 gegen die Kraft der Feder 28 vertikal beweglich ist. Der Stempel 64 hat auf einer Seite eine Längsnut 66 für den Eingriff einer Begrenzungsschraube 68.

Die Druckrollen 22 sind auf ihrer von dem Anschlaglineal 16 abgewandten Seite durch eine Schutzplatte 70 abgedeckt, die hier aus transparentem Werkstoff besteht. Die Schutzplatte 70 ist mit Hilfe von Schrauben 72 o. dgl. an den vier Rollenträgern 26 befestigt und verhindert, dass die Finger der Bedienungsperson in dem Bereich des rotierenden Sägeblattes 12 gelangen.

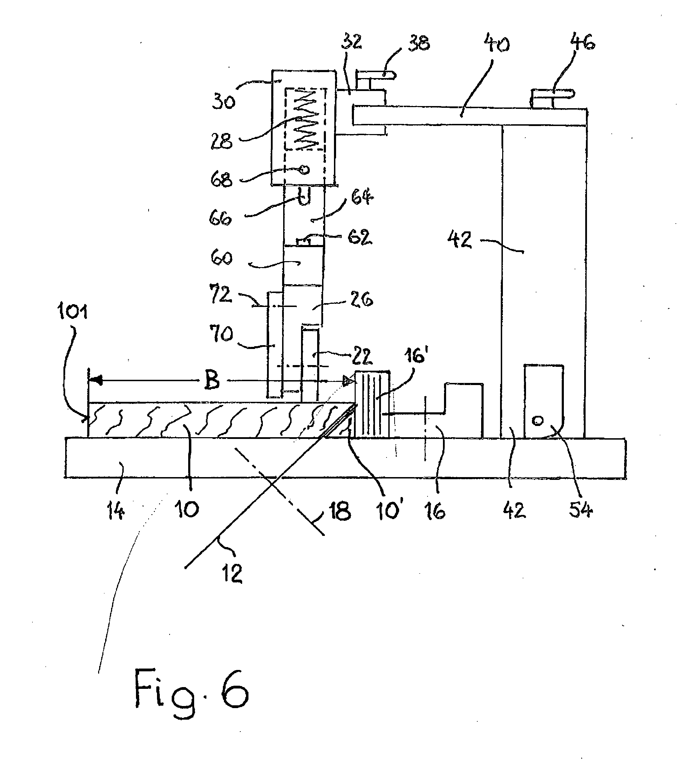

Im Beispiel der Figur 6 ist gezeigt, dass das Anschlaglineal 16 mit einer davor gesetzten Führungsleiste 16' so nahe an das bereits auf Breite B zugeschnittene Werkstück 10 eingestellt werden kann, dass das Sägeblatt 12 beim Gehrungssägen mit einem exakten Gehrungswinkel von 45° einen in Querschnitt dreieckigen Keil 10' abtrennt, wodurch im Vergleich zu Figur 5 ein geringstmöglicher Abfall erzeugt wird. Beim Sägen wird das Werkstück mit seiner oberen, spitzen Kante an der Führungsleiste 16' entlang geführt. Wenn anschließend das Werkstück 10 für den Gehrungsschnitt auf der gegenüberliegenden Längskante 101 gedreht wird, wird dort ein ebensolcher Dreieckskeil 10' abgetrennt, so dass auch dabei die gewünschte Breite B erhalten bleibt.

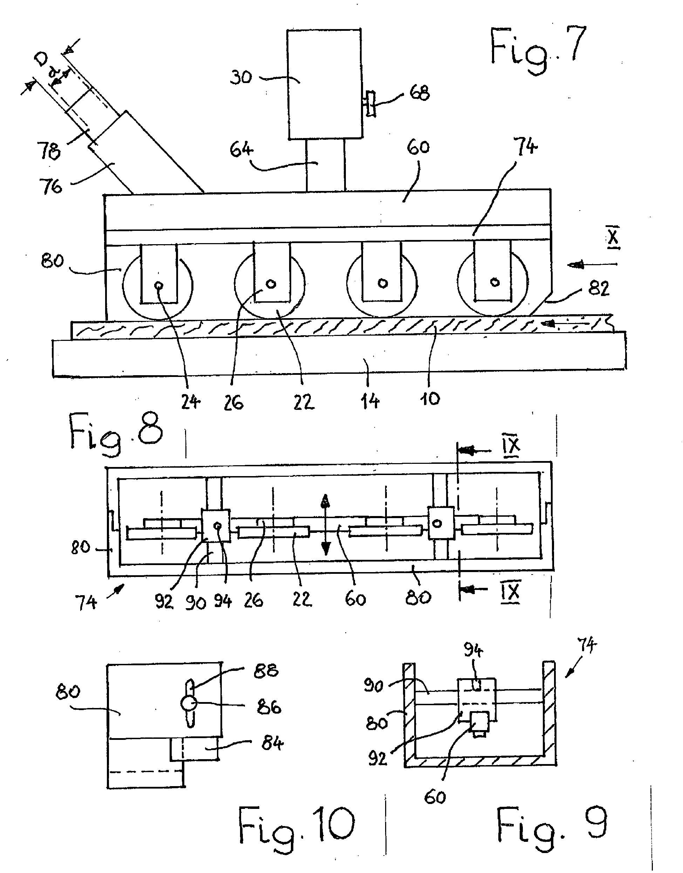

In den Figuren 7 bis 10 ist eine gegenüber der Ausführungsform der Figuren 4 bis 6 abgeänderte Variante dargestellt, bei der statt der Schutzplatte 70 ein aus Montagegründen zweiteiliges Gehäuse 74 vorgesehen ist, dessen Seitenwände 80 alle vier Druckrollen 22 einschließen. An der Oberseite des Gehäuses 74 ist ein Absaugstutzen 76 schräg angebracht, dessen Anschlussstutzen 78 zwei unterschiedliche Durchmesser für die gängigen Größen einer Saugleitung hat, nämlich einen großen Außendurchmesser D sowie einen kleineren Innendurchmesser d, in den eine Saugleitung eingeschraubt werden kann.

Sowohl die langen als auch die kurzen Seitenwände 80 des Gehäuses sind, wie in Figur 7 angedeutet, ähnlich wie die Schutzplatte 70 der Figuren 4 bis 6 aus einem transparenten Werkstoff hergestellt. In den Figuren 7 und 10 ist angedeutet, dass die zuführseitige, schmale Seitenwand 80 an ihrem unteren Ende eine Einlaufschräge 82 hat, um das Einschieben eines Werkstücks 10 zu erleichtern. Wie aus Figur 10 weiter hervorgeht, ist in diesem Bereich die schmale Seitenwand 80 in der unteren Hälfte zweiteilig ausgebildet und hat auf der der Säule 82 und damit auch dem Anschlaglineal 16 zugewandten Seite eine höhenverstellbare Schürze 84, die mittels einer Klemmschraube 86, die in ein Langloch 88 eingreift, fixiert werden kann. Damit ist es möglich, die Schürze 84 in Anpassung an das jeweils verwendete Profil des Anschlaglineals 16 anzuheben oder abzusenken.

In den Figuren 8 und 9 ist schließlich dargestellt, dass die Trägerschiene 60, von der die Rollenträger 26 mit ihren Druckrollen 22 nach unten abstehen, in Richtung des eingezeichneten Doppelpfeiles in Querrichtung verstellt werden kann. Hierzu dienen zwei zu den schmalen Seitenwänden 80 parallele Querachsen 90, die zwischen den beiden langen Seitenwänden 80 befestigt sind. Auf den beiden Querachsen 90 ist jeweils ein Gleitklotz 92 gelagert und mittels einer Feststellschraube 94 fixiert, der mittels eines Schlitzes die Trägerschiene 60 übergreift, an der er befestigt ist. Nach Lösen der beiden Feststellschrauben 94 können die beiden Gleitklötze 92 und mit diesem die Trägerschiene 60 in dem Gehäuse 74 in Querrichtung verstellt werden. Da Figur 8 das Gehäuse 74 von der Unterseite zeigt, weist auch in der nicht maßstabgetreuen Schnittdarstellung der Figur 9 die offene Unterseite des Gehäuses 74 nach oben.

Die in den Figuren 4 bis 10 dargestellte Lösung eignet sich vor allem für das Gehrungssägen von plattenförmigen Werkstücken 10, die keine konstante Dicke haben oder verzogen sind. Die mit mehreren Druckrollen 22 bestückte Druckeinheit 20 ist auch bei solchen problematischen Werkstücken 10 in der Lage, diese beim Vorschub mit großer Kraft gegen den Maschinentisch 14 zu drücken, wobei das von dieser Kraft erzeugte Moment von den starken Haftmagneten 50 der Säule 42 aufgenommen wird.

## Patentansprüche

1. Vorrichtung zum Führen von plattenförmigen Werkstücken (10) entlang dem Anschlaglineal (16) einer Werkzeugmaschine, insbesondere Tisch- oder Formatkreissäge, mit den folgenden Merkmalen:
a. zum Andrücken des Werkstücks (10) gegen den Maschinentisch (14) dient eine Druckeinheit (20), die am Maschinentisch (14) angebracht ist,
b. zur Befestigung der Druckeinheit (20) dient eine vertikale Säule (42), die auf dem Maschinentisch (14) fixierbar ist,
c. am oberen Ende der Säule (42) sind Mittel (46) zur Verankerung einer horizontalen Kragplatte (40) vorgesehen,
d. am gegenüberliegenden, freien Ende der Kragplatte (40) ist die Druckeinheit (20) lösbar befestigt,
e. die Säule (42) hat an ihrer plan ausgebildeten Unterseite wenigstens einen Haftmagneten (50), der
f. kraftschlüssig auf dem Maschinentisch (14) aufliegt.

2. Vorrichtung nach Anspruch 1, **dadurch gekennzeichnet, dass** die Kragplatte (40) ein Rechteck-Rohrprofil hat, in das nebeneinander liegende Flachstäbe hochkant eingelegt sind.

3. Vorrichtung nach Anspruch 1 oder 2, **dadurch gekennzeichnet, dass** am unteren Ende der Säule (42) ein um eine exzentrische Achse (56) schwenkbarer Lösehebel (54) gelagert ist.

4. Vorrichtung nach Anspruch 3, **dadurch gekennzeichnet, dass** das von der exzentrischen Achse (56) abgewandte und gegen den Maschinentisch (14) schwenkbare Ende (58) des Lösehebels (54) abgerundet ist.

5. Vorrichtung nach einem der vorhergehenden Ansprüche, **dadurch gekennzeichnet, dass** die am freien Ende der Kragplatte (40) angebrachte Druckeinheit (20) wenigstens eine Druckrolle (22) zum Andrücken des Werkstücks (10) gegen den Maschinentisch (14) aufweist.

6. Vorrichtung nach Anspruch 5, **dadurch gekennzeichnet, dass** zum Anritzen eines Werkstücks (10) mittels eines Sägeblatts (12) die Druckrolle (22) über dem Sägeblatt (12) positioniert ist.

7. Vorrichtung nach einem der Ansprüche 1 bis 5, **dadurch gekennzeichnet, dass** die Druckeinheit (20) mehrere, in einer Reihe an einer Trägerschiene (60) um zueinander parallele Achsen (24) gelagerte Druckrollen (22) aufweist, die auf ihrer von dem Anschlaglineal (16) abgewandten Seite durch eine mit der Trägerschiene (60) verbundene Schutzplatte (70) abgedeckt sind.

8. Vorrichtung nach einem der Ansprüche 1 bis 5, **dadurch gekennzeichnet, dass** die Druckeinheit (20) mehrere, in einer Reihe an einer Trägerschiene (60) um zueinander parallele Achsen (24) gelagerte Druckrollen (22) aufweist, die mit ihrer Trägerschiene (66) in einem Gehäuse (74) angebracht sind, dessen Seitenwände (80) die Druckrollen (22) einschließen.

9. Vorrichtung nach Anspruch 8, **dadurch gekennzeichnet, dass** an dem Gehäuse (74) ein Absaugstutzen (76) angebracht ist, dessen Anschlussstutzen (78) zwei unterschiedliche Durchmesser (D, d) für eine Saugleitung hat.

10. Vorrichtung nach Anspruch 8 oder 9, **dadurch gekennzeichnet, dass** die zuführseitige Seitenwand (80) des Gehäuses (74) an ihrem unteren Ende eine Einlaufschräge (82) hat.

11. Vorrichtung nach einem der Ansprüche 8 bis 10, **dadurch gekennzeichnet, dass** die dem Anschlaglineal (16) zugewandte Seitenwand (80) des Gehäuses (74) eine relativ zu der parallelen, nach außen gerichteten Seitenwand (80) höhenverstellbare Schürze (84) hat.

12. Vorrichtung nach einem der Ansprüche 8 bis 11, **dadurch gekennzeichnet, dass** die Trägerschiene (60) in dem Gehäuse (74) in Querrichtung relativ zu dem Anschlaglineal (16) verstellbar ist.

13. Vorrichtung nach Anspruch 12, **dadurch gekennzeichnet, dass** auf der Trägerschiene (60) zwei Gleitklötze (92) befestigt sind, die auf zwei Querachsen (90), welche zwischen den beiden Seitenwänden (80) befestigt sind, verschiebbar gelagert sind.

## Claims

1. Device for guiding plate-shaped workpieces (10) at a stop fence (16) of a machine tool, particularly of a circular saw bench or a final trimming saw, comprising the following features:
a. a pressure unit (20) mounted on the table (14) against which the workpiece (10) is pressed by said unit (20),
b. a vertical post (42) to be fixed on the table (14) and adapted to support said pressure unit (20),
c. means (46) provided on the upper end of said post (42) for anchoring a horizontal cantilever plate (40),
d. said pressure unit (20) is detachably fastened at the opposed, free end of said cantilever plate (40),
e. said post (42) is provided at its plane bottom side with at least one fixing magnet (50),
f. said magnet (50) is non-positively abutting on the table (14).

2. Device according to claim 1 wherein said cantilever plate (40) has a tubular structure with rectangular cross section into which flat bars are side-by-side inserted in upright position.

3. Device according to claim 1 or 2, wherein at the lower end of said post (42) a detachment lever (54) is mounted having an eccentric swivelling axis (56).

4. Device according to claim 3 wherein in said detachment lever (54) the edge portion (58) opposite to the eccentric axis (56) and to be turned against the table (14) is rounded.

5. Device according to any of the preceding claims wherein the pressure unit (20) mounted on the free end of said cantilever plate (40) is provided with at least one pressure wheel (22) adapted to press the workpiece (10) against the table (14).

6. Device according to claim 5 wherein said pressure wheel (22) is positioned above the saw blade (12) such that the workpiece (10) may be scratched by said saw blade (12).

7. Device according to any of the preceding claims 1 to 5 wherein said pressure unit (20) is provided with a series of pressure wheels (22) mounted on parallel axes (24) of a supporting rail (60), said wheels being covered on their side faces opposite to said stop fence (16) by a protecting shield (70) fastened to the supporting rail (60).

8. Device according to any of the preceding claims 1 to 5 wherein said pressure unit (20) is provided with a series of pressure wheels (22) mounted on parallel axes (24) of a supporting rail (60) which is housed, together with the wheels (22), in a case (74) the lateral walls (80) of which are encompassing the pressure wheels (22).

9. Device according to claim 8 wherein said case (74) is provided with an exhaust tube (76) the connection pipe (78) of which having two different diameters (D, d) for a suction tube.

10. Device according to claim 8 or 9 wherein in said case (74) the lateral wall (80) positioned on the feeding side has an intake slope at its lower end.

11. Device according to any of the preceding claims 8 to 10 wherein the lateral wall (80) of said case (74) positioned near the stop fence (16) is provided with a curtain (84) vertically adjustable with respect to the parallel outer sidewall (80).

12. Device according to any of the preceding claims 8 to 11 wherein in said case (74) the supporting rail (60) is adjustably mounted in a transverse direction with respect to the fence stop (16).

13. Device according to claim 12 wherein on said supporting rail (60) two slide blocks (92) are fastened adjustably mounted on two transverse axes (90) fixed between both lateral walls (80).

## Revendications

1. Dispositif d'acheminement de pièces à usiner (10) en forme de plaques le long d'une réglette de butée (16) d'une machine-outil, particulièrement d'une scie circulaire à table ou d'une scie à format, possédant les caractéristiques suivantes :
a) une unité de pression (20) montée sur la table (14) et apte à presser la pièce (10) contre la table (14),
b) une colonne verticale (42) apte à être fixée sur la table (14) et à fixer l'unité de pression (20),
c) des moyens (46) pour l'ancrage d'une plaque en console (40) horizontale sur le dessus de la colonne (42),
d) l'unité de pression (20) étant montée de façon amovible à l'autre extrémité libre de la plaque en console (40),
e) au moins un aimant de fixation (50) étant prévu sur la face inférieure plane de la colonne (42),
f) ledit aimant de fixation (50) adhérant sur la table (14).

2. Dispositif selon la revendication 1 **caractérisé par le fait que** la plaque en console (40) présente une section en tube rectangulaire dans laquelle sont insérés des barreau plats placés verticalement les uns à côté des autres.

3. Dispositif selon la revendication 1 ou 2 **caractérisé par le fait qu'**un levier de déblocage (54) est monté sur l'extrémité inférieure de la colonne (42) pivotant de façon excentrée sur un axe (56).

4. Dispositif selon la revendication 3 **caractérisé par le fait que** la face (56) du levier (54) opposée à l'axe excentrique (56) et apte à être pivotée sur la table (14) est arrondie.

5. Dispositif selon une des revendications précédentes **caractérisé par le fait que** l'unité de pression (20) montée sur l'extrémité libre de la plaque en console (40) comprend au moins un galet (22) pour presser la pièce (10) contre la table (14).

6. Dispositif selon la revendication 5 **caractérisé par le fait que** ledit galet (22) est positionné au-dessus de la lame de scie (12) de façon à pouvoir faire un trait de scie sur la pièce (10).

7. Dispositif selon une des revendications 1 à 5 **caractérisé par le fait que** l'unité de pression (20) est munie de plusieurs galets de pression (22) montés en série sur un rail de support (60) portant les axes parallèles (24), lesdits galets étant recouverts sur leur face opposée à la réglette de butée (16) par une plaque de protection (70) reliée au rail de support (60).

8. Dispositif selon une des revendications 1 à 5 **caractérisé par le fait que** l'unité de pression (20) est munie de plusieurs galets de pression (22) montés en série sur un rail de support (60) portant les axes parallèles (24), lesdits galets (22) et leur rail de support (60) étant logés dans un cadre (74) dont les parois latérales (80) entourent les galets de pression (22).

9. Dispositif selon la revendication 8 **caractérisé par le fait que** sur le cadre est monté un raccord d'aspiration (76) possédant une buse de raccord (78) de deux diamètres différents (D, d) pour recevoir un tuyau d'aspiration.

10. Dispositif selon la revendication 8 ou 9 **caractérisé par le fait que** la paroi (80) d'entrée du cadre présente sur son extrémité inférieure un biseau (82).

11. Dispositif selon une des revendications 8 à 10 **caractérisé par le fait que** la paroi latérale (80) du cadre (74) faisant face à la réglette de butée (16) a une jupe (84) verticalement déplaçable par rapport à la paroi parallèle externe (80).

12. Dispositif selon une des revendications 8 à 11 **caractérisé par le fait que** le rail de support (60) est monté dans le cadre (74) de façon transversalement réglable relativement à la réglette de butée (16).

13. Dispositif selon la revendication 12 **caractérisé par le fait que** sur le rail de support sont fixés deux blocs coulissants (92) sur deux axes transversaux (90) fixés entre les deux parois latérales (80).
